# EUROPÄISCHE PATENTANMELDUNG

(11) **EP 0 805 300 A2**
(43) Veröffentlichungstag der Anmeldung: **05.11.1997**
(21) Anmeldenummer: 97106766.5
(22) Anmeldetag: 24.04.1997
(51) Int. Cl.: F16L 55/10

(54) **Steuervorrichtung in einer Absauganlage**

(30) Priorität: 30.04.1996 DE 19617302
(71) Anmelder: Peters, Gerhard, 33175 Bad Lippspringe (DE)
(72) Erfinder: Peters, Gerhard, 33175 Bad Lippspringe (DE)
(74) Vertreter: Hanewinkel, Lorenz, Dipl.-Phys.

(57) **Zusammenfassung**

Die Steuervorrichtung (1) einer Absauganlage (30) zum gleichzeitigen Absaugen mehrerer Maschinen (2) od. dgl., bei der automatisch beim Einschalten einer Maschine (2) ein Absperrorgan (3) den Querschnitt der jeweiligen Absaugleitung (4) freigibt und beim Abschalten absperrt, weist eine in der Absaugleitung (4) angeordnete Kammer (5) auf, in der das Absperrorgan (3) in Form einer Klappe (3) um eine kammerseitige Achse (6) in die Öffnungs- und Schließstellung für den Abluftquerschnitt schwenkbar gelagert ist. Die Klappe (3) ist mit einem einer Rückholkraft entgegenwirkenden, pneumatischen Huborgan (10) für die Öffnungsbewegung verbunden. Das pneumatische Huborgan (10) ist ein doppelwirkender Zylinder (10) mit beidseitig eines Kolbens (11) angeordneten Zylinderkammern (12, 13), dessen eine Kolbenseite (15) in der Öffnungsstellung der Klappe (13) mit einem vorgegebenen Druck (Öffnungsdruck) beaufschlagt ist, und dessen andere Kolbenseite (16) von einem einstellbaren, dem Öffnungsdruck entgegenwirkenden Druck (Steuerdruck) beaufschlagt ist.

## Beschreibung

Die Erfindung betrifft eine Steuervorrichtung einer Absauganlage zum gleichzeitigen Absaugen mehrerer Maschinen od. dgl., bei der automatisch beim Einschalten einer Maschine ein Absperrorgan den Querschnitt der jeweiligen Absaugleitung freigibt und beim Abschalten absperrt, mit einer in der Absaugleitung angeordneten Kammer, in der das Absperrorgan in Form einer Klappe um eine kammerseitige Achse in die Öffnungs- und Schließstellung für den Abluftquerschnitt schwenkbar gelagert ist und mit einem einer Rückholkraft entgegenwirkenden pneumatischen Huborgan für die Öffnungsbewegung verbunden ist.

Eine derartige Steuervorrichtung ist bereits aus der DE-OS 37 22 815 A1 bekannt. Bei der dort beschriebenen Steuervorrichtung wird die Klappe durch eine Rückholfeder in die Schließstellung gezogen und von einem einfachen pneumatischen Zylinder, welcher nur in Schubrichtung auf die Klappe einwirkt, entgegen der Federkraft in die Öffnungsstellung gedrückt. Die Schließbewegung der Klappe ist hierbei entgegen der Strömungsrichtung der Luft innerhalb der Absaugleitung gerichtet. Diese Steuervorrichtung hat gegenüber den herkömmlichen Steuervorrichtungen, welche üblicherweise mit einem Schieber als Absperrorgan arbeiten, den großen Vorteil, daß beim Abschalten einzelner Maschinen der Querschnitt der zugehörigen Absaugleitung nicht vollkommen abgedichtet ist, sondern daß durch den durch das Absauggebläse erzeugte Unterdruck in der Leitung die Klappe entgegen der Federkraft bis zu einer bestimmten Stellung, in der die Federkraft mit der aerodynamischen Kraft im Gleichgewicht steht, aufgezogen wird und so automatisch auch durch die Absaugleitungen der abgeschalteten Maschine noch ein gewisser Anteil an Beiluft in die Absauganlage eingesogen wird. Damit ist im Absaugleitungssystem, selbst bei nur einer eingeschalteten Maschine, immer ein ausreichend großes Transportluftvolumen und somit eine genügend hohe Strömungsgeschwindigkeit gegeben, so daß Ablagerungen, z. B. von Staub und Spänen, die ansonsten bis zur völligen Verstopfung der Absauganlage führen können, sicher vermieden werden. Um bei jedem Einschaltzustand der einzelnen Maschinen auch tatsächlich immer die nötige Luftgeschwindigkeit zu erreichen, andererseits aber auch ein sicheres Schließen der einzelnen Klappen durch die Rückholfedern zu gewährleisten, ist es notwendig, beim Installieren der gesamten Anlage die Federspannung der Rückholfedern an den einzelnen Klappen genau aufeinander und auf das gewünschte Mindest-Transportluftvolumen abzustimmen. Dieser Einstellvorgang ist äußerst zeitaufwendig und kostenintensiv. Es müssen mehrfach Messungen der Strömungsgeschwindigkeit bei verschiedenen Einschaltzuständen der Maschinen in der Hauptansaugleitung durchgeführt werden und in Abhängigkeit von dem Ergebnis sämtliche Federn nachgestellt werden, bis eine optimale Einstellung erreicht ist. Da sich die Rückholfedern direkt an den Absperrorganen befinden und diese Absperrorgane üblicherweise in den Fabrikhallen unterhalb der Decke angeordnet sind, ist diese Einstellprozedur nicht nur zeitaufwendig sondern auch unnötig beschwerlich und gefährlich, da der Monteur jedes Mal, um zu den Absperrorganen der einzelnen Maschinen zu gelangen, nach Oben und wieder herunterklettern muß. Die gesamte Prozedur muß erneut durchgeführt werden sobald eine weitere Maschine an die Absauganlage angeschlossen wird oder wenn, z. B. infolge eines Austausches einer Maschine, der Querschnitt einer Absaugleitung geändert werden muß.

Es ist daher Aufgabe der Erfindung, eine verbesserte Steuervorrichtung der eingangs genannten Art zu schaffen, welche bei einfachem und kostengünstigem Aufbau eine einfache und schnelle Justage der einzelnen Klappen innerhalb der Absauganlage und somit eine schnelle Optimierung des Transportluftvolumens bzw. der Luftgeschwindigkeit in den Absaugleitungen ermöglicht.

Diese Aufgabe wird dadurch gelöst, daß das pneumatische Organ ein doppelwirkender Zylinder mit beidseitig eines Kolbens angeordneten Zylinderkammern ist, dessen eine Kolbenseite in der Öffnungsstellung der Klappe mit einem vorgegebenen Druck (Öffnungsdruck) beaufschlagt ist und dessen andere Kolbenseite von einem einstellbaren, dem Öffnungsdruck entgegenwirkenden Druck (Steuerdruck) beaufschlagt ist.

Durch den dem Öffnungsdruck entgegenwirkenden einstellbaren Steuerdruck ist gleichzeitig die Rückholkraft variierbar ohne daß an dem Rückholorgan, z. B. der Rückholfeder, selbst eine Justage erfolgen muß.

Die Unteransprüche enthalten vorteilhafte Ausgestaltungen und Weiterbildungen der erfindungsgemäßen Steuervorrichtung.

Bei einer besonders vorteilhaften und kostengünstigen Ausführungsform ist der Steuerdruck in den Huborganen mehrerer Klappen über einen gemeinsam an einer Druckluftleitung angeschlossenen Druckminderer einstellbar.

Somit kann über nur einen einzigen regelbaren Druckminderer die Gesamtanlage so eingestellt werden, daß in jedem Schaltzustand der Maschinen eine optimale Luftgeschwindigkeit in der Absaugleitung vorliegt. Der einstellbare Druckminderer befindet sich vorteilhafterweise an einer leicht zugänglichen Stelle, z. B. in dem Bereich in dem auch die Strömungsgeschwindigkeit in der Absaugleitung gemessen wird.

Weitere Vorteile dieser Ausführungsform bestehen darin, daß zum einen auch eine geregelte Steuerung der gesamten Anlage möglich ist, indem z. B. in zeitlichen Abständen oder permanent oder bei bestimmten Veränderungen der Schaltzustände der Maschinen die Luftgeschwindigkeit in der Absaugleitung automatisch gemessen wird und dann automatisch entsprechend der Druckminderer geregelt wird bis der von der Meßapparatur ermittelte Istwert einem vorgegebenen Sollwert entspricht. Dies ist besonders bei heute oft gebräuchlichen frequenzgesteuerten Absauggebläsen von großem Vorteil.

Ebenso ist es möglich, über den Druckminderer jederzeit in das Absaugsystem einzugreifen und z. B. impulsartig die Beiluft durch kurzfristiges Verringern der Rückholkraft zu erhöhen und somit evtl. aufgetretene hartnäckigere Ablagerungen wegzublasen.

Zur Erzeugung der nötigen Rückholkraft kann die Klappe mit mindestens einer parallel zum Huborgan in Schließstellung wirkenden Rückholfeder verbunden sein. Diese Rückholfeder ist vorteilhafterweise mit mindestens einem Stellglied zum Einstellen der Rückholkraft versehen. Die Einstellung dient hierbei nur einem Ausgleich der unterschiedlichen im Unterdruck stehenden Klappenflächen bei unterschiedlichen Absaugquerschnitten bzw. bei Verwendung von unterschiedlichen Zylindern als Huborganen. Diese Einstellung muß nur einmal vor der Montage der gesamten Steuervorrichtung geschehen und kann bereits im Werk durchgeführt werden.

An Stelle einer gemeinsamen Regelung aller Huborgane über einen gemeinsamen Druckminderer ist es selbstverständlich auch möglich, für jede Klappe eine separate Ansteuerung mit einem eigenen Druckminderer, der sich an einem leicht zugänglichen Bereich, z. B. an der Maschine, befindet, vorzusehen. In diesem Fall kann auf eine relative Voreinstellung der einzelnen Rückholfedern verzichtet werden. Selbstverständlich ist es auch in diesem Fall, z. B. mittels einer entsprechenden elektronischen Schaltung, möglich, die einzelnen Klappen automatisch so zu regeln, daß die gesamte eingesogene Beiluft und somit das gesamte Transportluftvolumen in jeder Schaltstellung der einzelnen Maschinen optimiert wird.

Das gesamte Transportluftvolumen in der Absauganlage kann somit durch die vorliegende Erfindung entscheidend einfacher, schneller und genauer zentral eingestellt, gesteuert und/oder verändert werden.

Die Erfindung wird im folgenden, unter Hinweis auf die beigefügten Zeichnungen, anhand von Ausführungsbeispielen näher erläutert. Es stellen dar:
- Fig. 1: eine Seitenansicht im teilweisen Schnitt einer in einer Absaugleitung angeordneten Steuervorrichtung für die Absaugluft mit einer Kammer mit einer darin schwenkbar gelagerten Klappe in der den Durchflußquerschnitt der Kammer absperrenden Schließstellung,
- Fig. 2: eine schematische Ansicht der pneumatischen Beschaltung mehrerer Zylinder mit gemeinsamer Einstellung des Steuerdrucks,
- Fig. 3: eine schematische Draufsicht auf eine Absauganlage mit mehreren Bearbeitungsmaschinen, die jeweils über eine Absaugleitung mit Steuervorrichtung an eine zentrale gebläseabhängige Absaugleitung angeschlossen sind,
- Fig. 4: eine Seitenansicht im teilweisen Schnitt einer Variante der Steuervorrichtung nach Fig. 1.

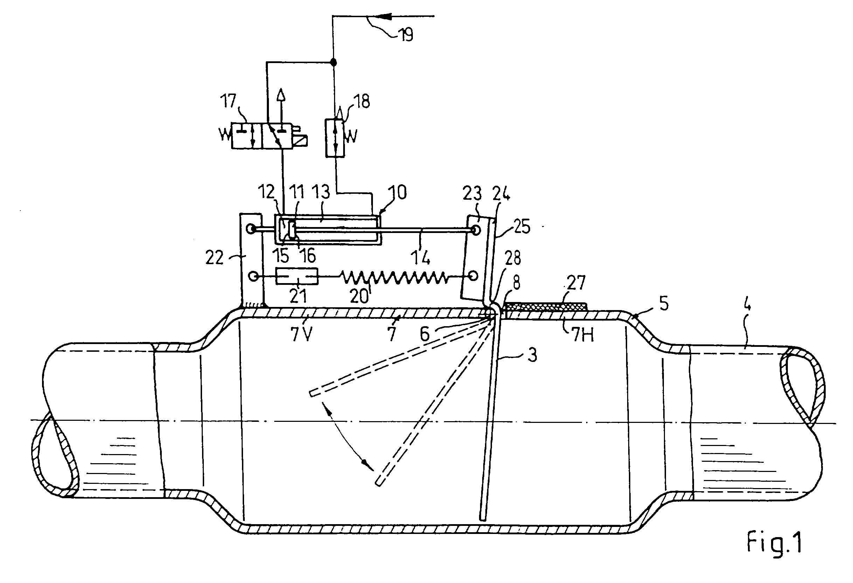

Gemäß dem Ausführungsbeispiel in Fig. 1 weist die erfindungsgemäße Steuervorrichtung eine in der Absaugleitung (4) der jeweiligen Maschine (2) angeordnete Kammer (5) mit einem mindestens teilweise eckigen Querschnitt auf. In dieser Kammer (5) befindet sich das Absperrorgan (3) in Form einer Klappe (3), die um eine an einer ebenen Wand (7) der Kammer (5) befindlichen Achse (6) in die Öffnungs- und Schließstellung für den Abluftquerschnitt schwenkbar gelagert ist. In der Kammerwand (7) befindet sich an der Schwenkachse (6) ein Schlitz (8), durch welchen die Klappe (3) über die Schwenkachse (6) hinaus mit einem verlängerten Klappenteil (24) nach außen geführt ist und dort mit dem Huborgan (10) und einer Rückholfeder (20) gekoppelt ist.

Die Klappe (3) ist außerhalb der Kammer (5) an der Schwenkachse (6) abgekröpft, wodurch in der Offenstellung der Klappe (3) die von der Schwenkachse (6) aus gesehen hintere Fläche (25) des außenliegenden Klappenteils (24) von außen auf den hinter dem Schlitz (8) befindlichen Teil (7H) der Kammerwand (7) aufliegt und die Klappe (3) an der Kröpfstelle (28) durch den Schlitz (8) in die Kammer (5) hineingeführt ist und unter der Schwenkachse (6) hinweg nahezu parallel zu dem vor der Schwenkachse (6) liegenden Teil (7V) der Kammerwand (7) verläuft. Auf der Außenseite der hinter dem Schlitz (8) befindlichen Kammerwand (7H) befindet sich eine Dichtfläche (27), so daß im voll geöffneten Zustand der Klappe (3) der Schlitz (8) abdichtend verschlossen ist und hierdurch keine Beiluft gezogen wird und der gesamte, vom Gebläse (32) erzeugte Sog zum Absaugen an der Maschine (2) genutzt wird.

An der von der Schwenkachse (6) aus gesehen vorderen Fläche des außenliegenden Klappenteils (24) befindet sich eine Lasche (23). An dieser Lasche (23) sind zum einen die Kolbenstange (14) des doppelwirkenden Zylinders (10) sowie die Rückholfeder (20) schwenkbar (gelenkig) befestigt. Das andere Ende der Rückholfeder (20) ist über ein Stellglied (21) mit einer an der Kammer (5) außen befestigten zweiten Lasche (22) schwenkbar (gelenkig) befestigt. An dieser Lasche (22) ist auch die andere Seite der Zylinder (10) schwenkbar angelenkt. Die Lasche (23) am äußeren Klappenteil (24) steht im geschlossenen Zustand der Klappe (3) nahezu parallel zu der an der Kammer (5) ortsfest angeordneten Lasche (22). Über das Stellglied (21) kann die Federspannung der Rückholfeder (20) eingestellt werden. Durch diese Einstellmöglichkeit kann die Rückholkraft in Abhängigkeit von der Querschnittsfläche der Klappe (3) und der Größe des Zylinders (10) relativ zu den anderen Steuervorrichtungen (1) in der Absauganlage (30) eingestellt werden.

Bei dem Zylinder (10) handelt es sich um einen doppelwirkenden Zylinder (10) mit beidseitig eines Kolbens (11) angeordneten Zylinderkammern (12, 13). Die eine Zylinderkammer (12) des Zylinders (10) ist als Hauptkammer (12) mit einem 3/2-Wege-Ventil (17) verbunden, welches z. B. mit dem Netzschalter der jeweiligen Maschine (2) steuerungsmäßig gekoppelt ist. Über dieses Ventil (17) wird im eingeschalteten Zustand der jeweiligen Maschine (2) die Zylinderkammer (12) mit einer Druckluftleitung (19) mit einem vorgegebenen Druck verbunden. Der Druck in dieser Leitung (19) beträgt ca. 5 bis 6 bar. Die entsprechende Kolbenseite (15) wird dadurch mit dem vorgegebenen Druck beaufschlagt und der Kolben (11) aus dem Zylinder (10) geschoben, wodurch die Klappe (3) in die Öffnungsstellung verbracht wird. Beim Ausschalten der Maschine (2) wird die Hauptkammer (12) automatisch durch das Ventil (17) entlüftet. Durch die Rückholfeder (20) wird dann die Klappe (3) in die Schließstellung gezogen. Bei dem Ventil (17) handelt es sich um ein 3/2-Wege-Magnetventil, welches so geschaltet ist, daß im stromlosen Zustand die Hauptkammer (12) entlüftet ist und die Klappe (3) durch die Rückholfeder (20) geschlossen ist. Bei einem Stromausfall, z. B. aufgrund eines Brandes oder bei einer Notabschaltung der gesamten Absauganlage (30) ist somit automatisch eine Zwangsschließung der jeweiligen Absaugleitung (4) gegeben.

Die andere Zylinderkammer (13) ist als Steuerkammer (13) über einen regelbaren Druckminderer (18) mit der Druckluftleitung (19) verbunden. Über diesen regelbaren Druckminderer (18) wird im Normalfall ein Druck von ca. 2 bis 3 bar in die Steuerkammer (13) gegeben. Dieser Druck in der Steuerkammer (13) wirkt parallel zu der Rückholkraft der Rückholfeder (20). Es ist somit zum einen eine erheblich präzisere Einstellung der Rückholkraft möglich als bei einer einfachen Einstellung über das Stellglied (21). Da der fest eingestellte Steuerdruck ständig gleichbleibend auf den Zylinder (10) wirkt unterstützt er außerdem die sichere Zustellung des Klappenautomaten.

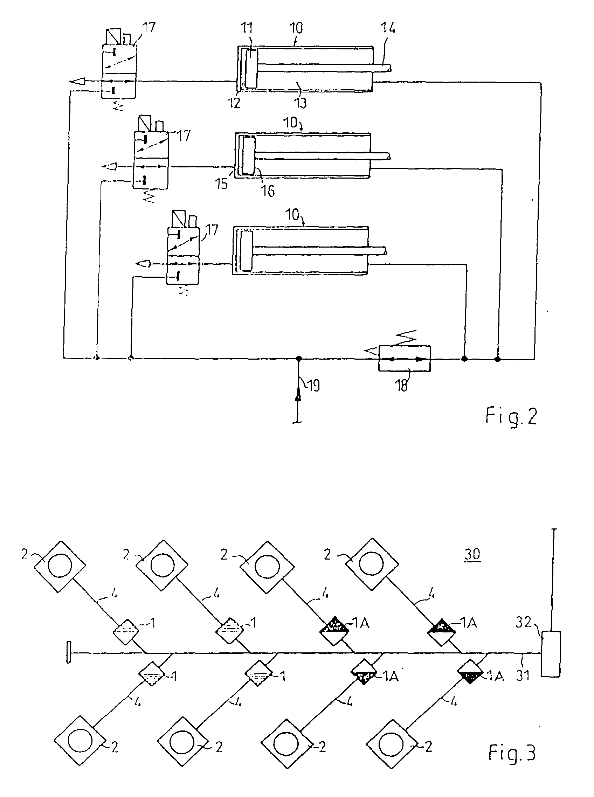

Üblicherweise sind mehrere Maschinen (2) über jeweils separate Absaugleitungen (4) und separate Steuervorrichtungen (1) mit einer Hauptabsaugleitung (31) verbunden, an welcher sich endseitig ein Ansauggebläse (32) befindet (s. Fig. 3). Die Steuerkammern (13) der Zylinder (10) von mehreren Klappen (3) bzw. Steuervorrichtungen (1) sind vorteilhafterweise über einen gemeinsamen Druckminderer (18) mit der Druckluftleitung (19) verbunden (s. Fig. 2). Hierdurch ist es möglich, durch eine einfache Einstellung des Druckminderers (18) das gesamte Transportluftvolumen in der Absauganlage (30) zu steuern bzw. zu optimieren. Selbstverständlich ist es auch möglich an die Absauganlage (30) weitere Maschinen (2) anzuschließen, welche über eine einfache AUF-ZU-Steuervorrichtung (1A) mit der Hauptleitung (31) verbunden sind und durch welche beim Abschalten der Maschinen (2) keine Beiluft gezogen werden kann.

Bei den erfindungsgemäßen Steuerungsvorrichtungen (1) ist eine zusätzliche Beiluftöffnung nicht nötig. Es reicht aus, wenn die Beiluft ausschließlich aus dem Maschinenanschluß gezogen wird. Dies reduziert die Fertigungskosten. Zudem entfällt das bei den Beiluftöffnungen zwangsläufig auftretende Luftansauggeräusch. Selbstverständlich ist es aber auch möglich, sofern dies gewünscht wird, zusätzliche Beiluftöffnungen einzubauen. Eine relativ kostengünstige Lösung besteht darin, den Schlitz (8) in der Kammerwand (7) als Beiluftöffnung zu verbreitern. Da sich der außenliegende Klappenteil (24) bei einem Öffnen der Klappe (3) automatisch über den Schlitz (8) legt, wird der Strömungsquerschnitt durch den verbreiterten Schlitz (8) dann automatisch verringert je weiter die Klappe (3) geöffnet wird. Bei vollkommener Öffnung der Klappe (3), d.h. beim Einschalten der Maschine (2), ist die durch den verbreiterten Schlitz (8) gebildete Beiluftöffnung durch den äußeren Klappenteil (24) vollkommen verschlossen.

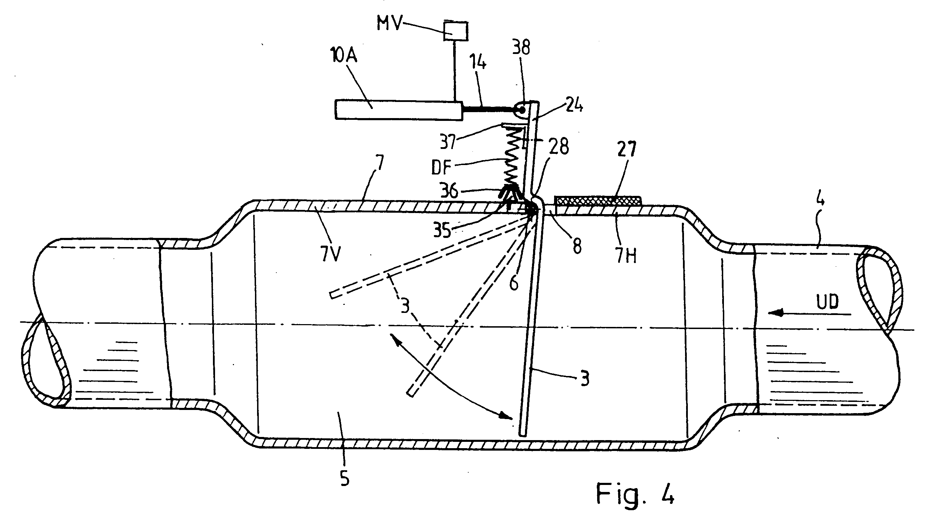

Bei der weiteren Steuervorrichtung nach Fig. 4 ist an dem außenliegenden Klappenteil (24) der Klappe (3) ein einfach wirkender Druckmittelzylinder (10A) mit zugeordnetem, einfach wirkendem Magnetventil (MV) angeschlossen.

Dem außenliegenden Klappenteil (24) der Klappe (3) ist weiterhin eine Druckfeder (DF) zugeordnet, welche sich mit einem Längenende auf einem Gelenklager, wie Kuppe (35) oder Spitze und darauf beweglich liegendem Federteller (36), der Kammer (5) und zwar auf dem Wandungsteil (7V) schwenkbar abstützt und mit dem anderen Längenende an einem an dem Klappenteil (24) befestigten Gegenlager (37) in Form eines Winkels anliegt.

Der Anlenkpunkt (38) der Schubstange (14) des Druckmittelzylinders (10A) und das Gegenlager (37) der Druckfeder (DF) sind seitlich gegeneinander versetzt am außenliegenden Klappenteil (24) angeordnet.

Bei der vorbeschriebenen Steuervorrichtung wird der sogenannte Öffnungsdruck über das 3/2-Wege-Magnetventil (17) bei Einschalten der Maschine wirksam, wodurch die Klappe (3) gegen den eingestellten Steuerdruck in die sichere Öffnungsstellung gebracht wird.

Die weitere Möglichkeit zum gleichen Ziel zu kommen, ist die Zuhilfenahme des im Rohrsystem wirksamen Unterdruckes, der stets auf die im Rohrquerschnitt stehende Klappenfläche wirkt, was durch die Ausführung gem. Fig. 4 genutzt wird.

Bei Einschalten der Maschine wird der eingestellte Steuerdruck über ein einfach wirkendes Magnetventil (MV) weggeschaltet, so daß der Luftstrom im Rohr (5) die Klappe (3) in die Auf-Stellung schwingt, wobei der nach außen stehende Klappenteil (24) durch die zugeordnete Öffnung (8) im Gehäuse (5) angesaugt wird und die Klappe (3) sicher in Endstellung hält. Zu diesem Zwecke bzw. zur Unterstützung der Auf-Bewegung kann auch die am außen stehenden Klappenteil wirkende einfache Druckfeder (DF) angebracht sein.

Bei Abschalten der Maschine öffnet das Magnetventil (MV) wieder, und die Klappe (3) schwenkt entsprechend dem eingestellten Steuerdruck wieder zurück.

Der Vorteil dieser Version ist, daß nur ein einfach wirkender Zylinder (10A) und ein einfach wirkendes Magnetventil (MV) erforderlich sind. Außerdem ist bei der Installation der Pneumatik jeweils pro Klappenautomat nur noch eine Pneumatikleitung zu verlegen.

Das Magnetventil (MV) wirkt dem Unterdruck (UD) einstellbar entgegen, wodurch eine einstellbare Menge der notwendigen Transportluft in jeder Betriebssituation sicher gewährleistet wird.

Der Steuerdruck wird bei jeder Klappe (3) einzeln und bei mehreren Klappen (3) gemeinsam eingestellt.

## Patentansprüche

1. Steuervorrichtung (1) einer Absauganlage (30) zum gleichzeitigen Absaugen mehrerer Maschinen (2) od. dgl., bei der automatisch beim Einschalten einer Maschine (2) ein Absperrorgan (3) den Querschnitt der jeweiligen Absaugleitung (4) freigibt und beim Abschalten absperrt, mit einer in der Absaugleitung (4) angeordneten Kammer (5), in der das Absperrorgan (3) in Form einer Klappe (3) um eine kammerseitige Achse (6) in die Öffnungs- und Schließstellung für den Abluftquerschnitt schwenkbar gelagert ist, und mit einem einer Rückholkraft entgegenwirkenden, pneumatischen Huborgan (10) für die Öffnungsbewegung verbunden ist, dadurch gekennzeichnet, daß das pneumatische Huborgan (10) ein doppelwirkender Zylinder (10) mit beidseitig eines Kolbens (11) angeordneten Zylinderkammern (12, 13) ist, dessen eine Kolbenseite (15) in der Öffnungsstellung der Klappe (13) mit einem vorgegebenen Druck (Öffnungsdruck) beaufschlagt ist, und dessen andere Kolbenseite (16) von einem einstellbaren, dem Öffnungsdruck entgegenwirkenden Druck (Steuerdruck) beaufschlagt ist.

2. Steuervorrichtung nach Anspruch 1, dadurch gekennzeichnet, daß eine Zylinderkammer (12) als Hauptkammer (12) mit einem Ventil (17) verbunden ist, welches im eingeschalteten Zustand der jeweiligen Maschine (2) die Zylinderkammer (12) mit einer Druckluftleitung (19) mit einem vorgegebenen Druck verbindet und über welches im ausgeschalteten Zustand der Maschine (2) die Zylinderkammer (12) entlüftet wird, und die andere Zylinderkammer (13) als Steuerkammer (13) über einen regelbaren Druckminderer (18) mit der Druckluftleitung (19) verbunden ist.

3. Steuervorrichtung nach Anspruch 1 oder 2, dadurch gekennzeichnet, daß der Steuerdruck in den Huborganen (10) mehrerer Klappen (3) über einen gemeinsamen an eine Druckluftleitung (19) angeschlossenen Druckminderer (18) einstellbar ist.

4. Steuervorrichtung nach einem der Ansprüche 1 bis 3, dadurch gekennzeichnet, daß die Klappe (3) mit mindestens einer parallel zum Huborgan (10) in Schließrichtung wirkenden Rückholfeder (20) verbunden ist.

5. Steuervorrichtung nach Anspruch 4, dadurch gekennzeichnet, daß an der Rückholfeder (20) mindestens ein Stellglied (21) zum Einstellen der Rückholkraft angeordnet ist.

6. Steuervorrichtung nach einem der Ansprüche 1 bis 5, dadurch gekennzeichnet, daß die Kammer (5) zumindest teilweise einen eckigen Querschnitt aufweist und die Klappe (3) um eine an einer ebenen Wand (7) der Kammer (5) befindliche Achse (6) schwenkbar gelagert ist und durch einen Schlitz (8) in der Kammerwand (7) an der Schwenkachse (6) über dieselbe hinaus nach außen geführt ist und dort mit dem Huborgan (10) und/oder der Rückholfeder (20) gekoppelt ist.

7. Steuervorrichtung nach Anspruch 6, dadurch gekennzeichnet, daß die Klappe (3) außerhalb der Kammer (5) an der Schwenkachse (6) abgekröpft ist, wodurch in der Offenstellung der Klappe (3) die von der Schwenkachse (6) aus gesehen hintere Fläche (25) des außenliegenden Klappenteils (24) von außen auf dem hinter dem Schlitz (8) befindlichen Teil (7H) der Kammerwand (7) aufliegt und die Klappe (3) an der Kröpfstelle (28) durch den Schlitz (8) in die Kammer (5) hineingeführt ist und unter der Schwenkachse (6) hinweg parallel zu dem vor der Schwenkachse (6) liegenden Teil (7V) der Kammerwand (7) verläuft.

8. Steuervorrichtung nach Anspruch 7, dadurch gekennzeichnet, daß auf der von der Schwenkachse (6) aus gesehen hinteren Fläche (25) des außenliegenden Klappenteils (24) und/oder auf der Außenseite der hinter dem Schlitz (8) befindlichen Kammerwand (7H) eine Dichtfläche (27) angeordnet ist.

9. Steuervorrichtung nach einem der Ansprüche 1 bis 8, dadurch gekennzeichnet, daß an dem außenliegenden Klappenteil (24) der Klappe (3) ein einfach wirkender Druckmittelzylinder (10A) mit zugeordnetem, einfach wirkendem Magnetventil (MV) angeschlossen ist.

10. Steuervorrichtung nach Anspruch 9, dadurch gekennzeichnet, daß dem außenliegenden Klappenteil (24) der Klappe (3) eine Druckfeder (DF) zugeordnet ist, welche sich mit einem Längenende auf einem Gelenklager, wie Kuppe (35) mit Federteller (36) der Kammer (5) schwenkbar abstützt und mit dem anderen Längenende an einem an dem Klappenteil (24) befestigten Gegenlager (37) in Form eines Winkels anliegt.

11. Steuervorrichtung nach Anspruch 9 und 10, dadurch gekennzeichnet, daß der Anlenkpunkt (38) der Schubstange (14) des Druckmittelzylinders (10A) und das Gegenlager (37) der Druckfeder (DF) seitlich gegeneinander versetzt am außenliegenden Klappenteil (24) angeordnet sind.
